# EUROPÄISCHE PATENTSCHRIFT

(11) **EP 3 967 127 B1**
(45) Veröffentlichungstag und Bekanntmachung des Hinweises auf die Patenterteilung: **09.10.2024**
(21) Anmeldenummer: 21189111.4
(22) Anmeldetag: 02.08.2021
(51) Int. Cl.: A01D 43/08, A01F 29/09

(54) **SELBSTFAHRENDER FELDHÄCKSLER**
SELF-PROPELLED CHAFF CUTTER
RÉCOLTEUSE-HACHEUSE-CHARGEUSE DE FOURRAGE AUTOMOTRICE

(30) Priorität: 09.09.2020 DE 102020123480
(43) Veröffentlichungstag der Anmeldung: 16.03.2022
(73) Patentinhaber: CLAAS Selbstfahrende Erntemaschinen GmbH, 33428 Harsewinkel (DE)
(72) Erfinder: Wehner, Gregor, 88356 Ostrach Unterweiler (DE); Harsch, Sebastian, 88348 Bad Saulgau (DE)
(74) Vertreter: CLAAS Gruppe

(56) Entgegenhaltungen:
- EP-A1- 1 852 011
- EP-A1- 3 530 101
- EP-B1- 2 735 222
- DE-A1- 102012 022 985
- DE-A1- 2 445 702

## Beschreibung

Die vorliegende Erfindung betrifft einen selbstfahrenden Feldhäcksler gemäß dem Oberbegriff des Anspruches 1.

Aus der EP 2 735 222 B1 ist ein Feldhäcksler bekannt, der eine Einzugsvorrichtung, an der ein Vorsatzgerät angeordnet ist, eine Häckselvorrichtung, die eine rotierend angetriebene Häckseltrommel mit Häckselmessern und eine Gegenschneide zum Zerkleinern von Erntegut sowie einen zwischen Gegenschneide und einem Auswurfkanal angeordneten, relativ zu der Häckseltrommel abstandsveränderlichen Trommelboden aufweist, sowie eine Steuerungsvorrichtung umfasst. Mittels der Steuerungsvorrichtung wird eine Verstelleinrichtung auf Basis eines Vergleichs eines Sollwertes und eines Istwertes angesteuert, um den Abstand des Trommelbodens während des Erntebetriebs automatisch zu regeln. Dazu werden Sollwerte in Abhängigkeit von verschiedenen Betriebsparametern in einer Speichereinheit der Steuerungsvorrichtung hinterlegt. Zudem ist vorgesehen, dass ein Bediener des Feldhäckslers mittels einer Eingabeeinheit einen Istwert für den Abstand des Trommelbodens manuell vorgeben kann. Die manuelle Vorgabe birgt dabei die Gefahr einer Fehlbedienung respektive Fehleinstellung, was zu Schäden an der Häckselvorrichtung führen kann.

Ein selbstfahrender Feldhäcksler der eingangs genannten Art ist aus der EP 3 530 101 A1 bekannt. Dort ist ein Feldhäcksler mit einem Häckseltrommelautomaten beschrieben, der dazu eingerichtet ist, zumindest eine Eigenschaft eines durch ein Vorsatzgerät aufzunehmenden Ernteguts mittels einer Vorrichtung zur Vorfelderkennung zu bestimmen, um in Abhängigkeit von der zumindest einen Eigenschaft den Abstand zwischen der Häckseltrommel und dem Trommelboden zu ermitteln und zu adaptieren. Die Einstellung des Abstands des Trommelbodens kann auch hier manuell durch einen Bediener übersteuert werden.

Ausgehend von dem vorstehend genannten Stand der Technik liegt der Erfindung die Aufgabe zugrunde, einen Feldhäcksler der vorstehend genannten Art weiterzubilden, durch den die Gefahr einer Fehlbedienung vermieden wird sowie sich durch eine verbesserte Funktionalität des Häckseltrommelautomaten auszeichnet.

Diese Aufgabe wird bei einem selbstfahrenden Feldhäcksler gemäß dem Oberbegriff von Anspruch 1 durch die Merkmale des kennzeichnenden Teils des Anspruches 1 gelöst. Vorteilhafte Weiterbildungen sind Gegenstand der Unteransprüche.

Gemäß dem Anspruch 1 wird ein selbstfahrender Feldhäcksler vorgeschlagen, umfassend:
- eine Einzugsvorrichtung, an der ein Vorsatzgerät angeordnet ist,
- eine Häckselvorrichtung, die eine rotierend angetriebene Häckseltrommel mit Häckselmessern und eine Gegenschneide zum Zerkleinern von Erntegut sowie einen zwischen Gegenschneide und einem Auswurfkanal angeordneten, relativ zu der Häckseltrommel abstandsveränderlichen Trommelboden aufweist, und
- ein Fahrerassistenzsystem zur Ansteuerung zumindest der Häckselvorrichtung, wobei das Fahrerassistenzsystem einen Speicher zum Hinterlegen von Daten und eine Rechenvorrichtung zur Verarbeitung der in dem Speicher hinterlegten Daten umfasst, wobei die Häckselvorrichtung zusammen mit dem Fahrerassistenzsystem einen Häckseltrommelautomaten bildet. Erfindungsgemäß ist vorgesehen, dass der Häckseltrommelautomat dazu eingerichtet ist, den Trommelboden initial bei Inbetriebnahme des Feldhäckslers in einer zur Häckseltrommel beabstandeten Ausgangsstellung, in welcher der Trommelboden einen, insbesondere einstellbaren, Maximalabstand zu der Häckseltrommel aufweist, zu halten oder in die beabstandete Ausgangsstellung zu überführen, und eine Durchführung einer Annäherung des Trommelbodens an die Häckseltrommel, insbesondere auf einen einstellbaren Minimalabstand, ausgehend von der Ausgangsstellung nur unter Berücksichtigung von zumindest einem feldhäckslerspezifischen Ereignis zuzulassen. Auf diese Weise wird gewährleistet, dass eine vorherige Einstellung des Abstands von Trommelboden und Häckseltrommel, die während des vorangegangenen Erntebetriebes, manuell oder automatisch, eingestellt worden ist, auf die Ausgangsstellung zurückgeführt wird, bevor der Erntebetrieb, nach einer vollständigen Abschaltung des Feldhäckslers, erneut aufgenommen wird. Darüber hinaus wird dadurch, dass eine, insbesondere manuelle, Durchführung einer Annäherung des Trommelbodens an die Häckseltrommel ausgehend von der Ausgangsstellung nur unter Berücksichtigung von zumindest einem feldhäckslerspezifischen Ereignis zugelassen wird, die Gefahr einer Fehlbedienung verringert wird. Insbesondere soll hierdurch der Funktionssicherheit eine höhere Priorität eingeräumt werden. Ein feldhäckslerspezifisches Ereignis ist eine Änderung eines unmittelbar den Feldhäcksler betreffenden Betriebszustands, welche den Betriebsablauf signifikant beeinflusst.

Insbeosndere kann ein feldhäckslerspezifisches Ereignis das Durchführen eines Schleifvorgangs der Häckselmesser und/oder der Gegenschneide sein. Während des Schleifvorganges der Häckselmesser und/oder der Gegenschneide wird der Trommelboden, ausgehend von einem aktuellen Istabstand, der dem Maximalabstand oder einem, insbesondere einstellbaren, Minimalabstand entspricht, einmalig über den gesamten Verstellbereich zwischen dem Maximalabstand in der Ausgangsstellung und dem Minimalabstand des Trommelbodens zur Häckseltrommel verfahren, und anschließen wieder in seinen vorherigen Istabstand überführt werden. Der Minimalabstand des Trommelbodens zur Häckseltrommel ist der Abstand, in dem gewährleistet ist, dass der Trommelboden die Häckselmesser im Betrieb der Häckseltrommel nicht berührt.

Weiterhin kann ein feldhäckslerspezifisches Ereignis die Detektion eines Fremdkörpers in der Einzugsvorrichtung sein. Insbesondere handelt es sich um metallische Fremdkörper, die mittels einer Metalldetektionseinrichtung erfasst werden können. Die Metalldetektionseinrichtung ist mit einer der Einzugswalzen der Einzugsvorrichtung derart gekoppelt, dass metallische Fremdkörper im an der Einzugswalze vorbeigeführten Erntegutstrom erfasst werden können.

Insbesondere kann bei einer Detektion eines Fremdkörpers die Überführung des Trommelbodens in eine Position, in welcher der Trommelboden einen Minimalabstand zu der Häckseltrommel aufweist, automatisch erfolgen. In diesem Fall kann der Abstand des Trommelbodens, insbesondere des der Gegenschneide zugewandten Endes des Trommelbodens, auf den Minimalabstand überführt werden, um ein Eintreten des Fremdkörpers in die Häckseltrommel zu vermeiden.

Des Weiteren kann ein feldhäckslerspezifisches Ereignis die Detektion des inaktiven Betriebszustands der Einzugsvorrichtung sein. Hierdurch kann gewährleistet werden, dass eine manuelle Verstellung des Trommelbodens ausgehend von einem aktuellen Istabstand in eine neue Position, in welcher der Trommelboden den Minimalabstand zur Häckseltrommel aufweist, nur dann möglich ist, wenn die Einzugsvorrichtung inaktiv ist. Hierdurch kann eine mögliche Beschädigung insbesondere von Aktoren, die der Verstellung des Trommelbodens dienen, vermieden werden. Ebenso kann dem Auftreten eines möglichen Gutstaus begegnet werden, wenn der manuell gewählte Abstand bei den vorherrschenden Erntekonditionen dem Minimalabstand entspricht.

Weiterhin kann ein feldhäckslerspezifisches Ereignis das Auftreten einer Motordrückung eines Antriebsmotors des Feldhäckslers und das gleichzeitige Vorhandensein von Erntegut im Vorsatzgerät und/oder der Einzugsvorrichtung sein. Bei einem Auftreten einer Motordrückung und dem gleichzeitigen Vorhandensein von Erntegut im Vorsatzgerät und/oder der Einzugsvorrichtung wird das Verstellen des aktuellen Istabstandes des Trommelbodens in eine neue Position, in welcher der Trommelboden den Minimalabstand zur Häckseltrommel aufweist, verhindert. Dies dient dazu, zu verhindern, dass die Motordrückung noch verstärkt wird. Hierdurch kann dem Entstehen eines Gutsstaus begegnet werden.

Des Weiteren kann ein feldhäckslerspezifisches Ereignis ein Absinken des Durchsatzes an aufgenommenem Erntegut unterhalb eines Schwellwertes sein, während sich das Vorsatzgerät und/oder die Einzugsvorrichtung in ihrer Arbeitsposition befinden. Das Absinken des Durchsatzes während der Erntegutaufnahme kann durch eine Bestandslücke ausgelöst werden, was eine, zumindest temporäre, Anpassung des Abstands des Trommelbodens an die geänderten Erntebedingungen erfordern kann. Ergänzend kann ein Monitoring vorgesehen sein, welches die Häufigkeit des Auftretens von Bestandslücken erfasst, um eine periodische Änderung des Abstands des Trommelbodens zu verhindern. Die Detektion von Bestandslücken kann im Rahmen einer Vorfelderkennung durchgeführt werden.

Ein weiteres feldhäckslerspezifisches Ereignis kann das manuelle Abschalten der Einzugsvorrichtung sein. Hierbei deaktiviert der Bediener des Feldhäckslers die Einzugsvorrichtung manuell, beispielsweise im Fall des Wechselns des den Feldhäcksler begleitenden Transportwagens oder Überladewagens. In dieser Situation ist eine Verstellung des aktuellen Istabstandes des Trommelbodens in eine in eine neue Position, in welcher der Trommelboden den Minimalabstand zur Häckseltrommel aufweist, möglich. Insbesondere ist die Verstellung des aktuellen Istabstandes des Trommelbodens möglich, da in dieser Situation kein Erntegut aufgenommen wird.

Weiterhin kann der Feldhäcksler einen Hauptantriebsstrang aufweisen, dessen aktiver oder inaktiver Betriebszustand ein feldhäckslerspezifisches Ereignis ist, und dass der Trommelboden bei Detektion des inaktiven Betriebszustands des Hauptantriebsstrangs automatisch in seine Ausgangsstellung überführt wird. Der Hauptantriebsstrang umfasst Komponenten, die dem, insbesondere mechanischen, hydraulischen oder elektromechanischen, Antrieb zumindest des Vorsatzgerätes, der Einzugsvorrichtung sowie der Häckselvorrichtung dienen, und mit der Motorabtriebswelle des Antriebsmotors mittelbar oder unmittelbar verbunden sein können.

Vorzugsweise kann der Häckseltrommelautomat für einen wahlweisen Betrieb in einem Automatikmodus und einem manuellen Modus eingerichtet sein. Zwischen diesen Modi kann der Bediener wechseln, wenn zumindest ein feldhäckslerspezifisches Ereignis vorliegt, hier, neben der eingeschalteten Zündung, das Detektieren des laufenden Antriebsmotors.

Einen weiteren Aspekt bildet die Funktion des Gängighaltens der Beweglichkeit des Trommelbodens, um bei dauerhafter und zumindest überwiegender Nutzung des manuellen Modus das Auftreten von Blockagen oder ein Klemmen von, insbesondere mechanischen, Aktoren durch Ansammlung von Erntegut und/oder aufgrund von Verschmutzung zu vermeiden. Dies wird durch das initiale Überführen des Trommelbodens in dessen Ausgangsstellung erreicht.

Weiterhin kann vorgesehen sein, dass der Häckseltrommelautomat dazu eingerichtet ist, einen Übergang zwischen dem manuellen Modus und dem Automatikmodus aufgrund einer manuellen Eingabe durchzuführen oder dass bei einem Ausfall eines Regelparameters ein automatischer Übergang in den manuellen Modus erfolgt. Das Durchführen des manuellen Wechsels der Betriebsmodi, vom manuellen Modus in den Automatikmodus und umgekehrt, unterliegt der Voraussetzung des Vorliegens zumindest eines feldhäckslerspezifischen Ereignisses, wie weiter oben bereits ausgeführt. Hingegen kommt es bei einem Ausfall eines für die Funktion des Häckseltrommelautomaten erforderlichen und zu überwachenden Regelparameters, wie dem Betriebszustand des Antriebsmotors und/oder des Hauptantriebsstranges, zu einem automatischen Wechsel in den manuellen Modus. Der Ausfall eines Regelparameters kann dabei auf eine Fehlfunktion in der Kommunikation und/oder dem Ausfall einer Sensoreinrichtung zur Überwachung des Betriebszustands sein. Dabei ist vorgesehen, dass die vor dem Ausfall eingestellte aktuelle Trommelbodenposition zunächst beibehalten wird. Weitere Regelparameter können die Betriebszustände und/oder Betriebsparameter von Vorsatzgerät, Einzugsvorrichtung sowie Häckselvorrichtung bilden.

Gemäß einer bevorzugten Weiterbildung kann der Häckseltrommelautomat eine Eingabe-Ausgabe-Einheit ansteuern, welche zur Anzeige des aktiven Modus eingerichtet ist. Die Eingabe-Ausgabe-Einheit ermöglicht es darüber hinaus, das der Bediener Eingaben tätigt, beispielsweise zum Wechseln zwischen den Betriebsmodi "manueller Modus" und "Automatikmodus" oder zur Eingabe eines einzustellenden Abstandswertes, des Minimalabstands oder des Maximalabstands, für den Abstand des Trommelbodens.

Weiterhin kann der Häckseltrommelautomat die Eingabe-Ausgabe-Einheit ansteuern, um den Ausfall eines Regelparameters anzuzeigen.

Zudem kann der Häckseltrommelautomat die Eingabe-Ausgabe-Einheit ansteuern, um zu signalisieren, dass ein feldhäckslerspezifisches Ereignis vorliegt, welches eine Verstellung des Abstands des Trommelbodens hin zum Minimalabstand verhindert.

Die Eingabe-Ausgabe-Einheit kann ein Display in der Fahrerkabine des Feldhäckslers in umfassen oder als berührungssensitiver Bildschirm ausgeführt sein, aber auch als Anzeigeeinheit einer mobilen Datenverarbeitungsvorrichtung. Dabei kann der Häckseltrommelautomat die Eingabe-Ausgabe-Einheit ansteuern, dem Bediener anzuzeigen, wenn es aufgrund eines feldhäckslerspezifischen Ereignisses nicht möglich ist, eine manuelle Verstellung des Trommelbodenabstands durchzuführen. Vorzugsweise kann dabei auch die Ursache dafür, das ursächliche feldhäckslerspezifische Ereignis, angezeigt werden. Darüber hinaus kann der Häckseltrommelautomat die Eingabe-Ausgabe-Einheit ansteuern, dem Bediener anzuzeigen, welche Voraussetzung vorliegen muss, um die gewünschte Verstellung des Trommelbodenabstands vom Maximalabstand hin zum Minimalabstand durchführen zu können.

Insbesondere kann der Häckseltrommelautomat die Eingabe-Ausgabe-Einheit ansteuern, um den Ausfall eines Regelparameters anzuzeigen. Weiterhin kann bei Ausfall eines Regelparameters der aktuell vorherrschende Betriebsmodus durch die Eingabe-Ausgabe-Einheit angezeigt werden und in welcher Stellung sich der Trommelboden befindet respektive welchen Istabstand der Trommelboden aufweist.

Weiterhin kann der Feldhäcksler wenigstens eine Sensoreinrichtung umfassen, die dazu eingerichtet ist, zumindest ein feldhäckslerspezifisches Ereignis zu detektieren. Bei der wenigstens einen Sensoreinrichtung kann es sich um eine Sensoreinrichtung handeln, die dazu eingerichtet ist, das Vorhandensein von Erntegut im Vorsatzgerät zu detektieren. Alternativ oder zusätzlich kann es sich bei der wenigstens einen Sensoreinrichtung um eine Sensoreinrichtung handeln, die dazu eingerichtet ist, das Vorhandensein von Erntegut in der Einzugsvorrichtung zu detektieren. Alternativ oder zusätzlich kann es sich bei der wenigstens einen Sensoreinrichtung um eine Sensoreinrichtung handeln, die dazu eingerichtet ist, den Betriebszustand des Antriebsmotors, des Vorsatzgerätes, der Einzugsvorrichtung und/oder der Häckselvorrichtung zu detektieren.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers in einer Seitenansicht;
- Fig. 2: eine schematische Darstellung einer Häckseltrommel einer Häckselvorrichtung eines Feldhäckslers; und
- Fig. 3: ein Ablaufdiagramm einer spezifischen Funktion eines Häckseltrommelautomaten des Feldhäckslers.

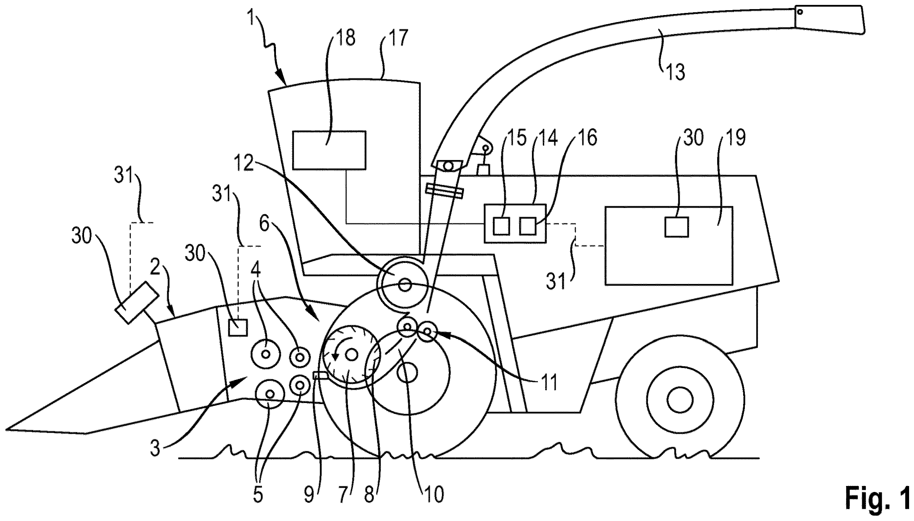

In Fig. 1 ist ein selbstfahrender Feldhäcksler 1 in einer Seitenansicht schematisch dargestellt, der mit einem Vorsatzgerät 2 versehen ist. In der Fig. 1 ist als Vorsatzgerät 2 ein Maispflücker schematisch angedeutet, es können jedoch auch andere Vorsatzgeräte wie beispielsweise eine Pickup an den Feldhäcksler 1 angebaut sein. Das Vorsatzgerät 2 nimmt das Erntegut vom Feld auf und fördert es einer Einzugsvorrichtung 3 zu, die im Ausführungsbeispiel aus einer Walzengruppe mit oberen und unteren Einzugswalzen 4,5 5 besteht. Die Einzugswalzen 4, 5 der Einzugsvorrichtung 3 üben eine Presskraft auf das aufgenommene Erntegut aus. Die Einzugsvorrichtung 3 fördert das zu einer Erntegutmatte verdichtete Erntegut einer Häckselvorrichtung 6 zu, welche eine rotierend angetriebene Häckseltrommel 7 mit über deren Umfang verteil angeordneten Häckselmessern 8 aufweist. Die Häckselmesser 8 schneiden die von der Einzugsvorrichtung 3 zugeführte Erntegutmatte an einer Gegenschneide 9. Das geschnittene bzw. gehäckselte Erntegut wird durch die Rotationsbewegung der Häckseltrommel 7 in einen nachgeordneten Auswurfschacht 10 geschleudert, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten Nachbeschleuniger 12 zusätzlich beschleunigt durch einen Auswurfkrümmer 13 in ein mitgeführtes Transportfahrzeug gefördert wird.

Zum Antreiben der Arbeitsaggregate des Feldhäckslers 1, d.h. Vorsatzgerät 2, Einzugsvorrichtung 3, Häckselvorrichtung 6 sowie Nachbeschleuniger 12, ist ein Antriebsmotor 19 vorgesehen. Die Arbeitsaggregate können durch einen - nicht dargestellten - Hauptantriebsstrang, mit der Motorabtriebswelle des Antriebsmotors 19 verbunden sein. Der Antriebsmotor 19 dient auch zum Betreiben eines hydrodynamischen Fahrantriebs des Feldhäckslers 1.

Der Feldhäcksler 1 umfasst eine Fahrerkabine 17, in der eine Eingabe-Ausgabe-Einheit 18 angeordnet ist. Weiterhin umfasst der Feldhäcksler 1 ein Fahrerassistenzsystem 14, welches einen Speicher 15 zum Hinterlegen von Daten und eine Rechenvorrichtung 16 zur Verarbeitung der in dem Speicher 15 hinterlegten Daten umfasst. Das Fahrerassistenzsystem 14 ist dazu eingerichtet, den Bediener des Feldhäckslers 1 bei der Bedienung desselben zu unterstützen. Das Fahrerassistenzsystem 14 ist dabei zur Ansteuerung zumindest der Häckselvorrichtung 6 eingerichtet. Des Weiteren steht das Fahrerassistenzsystem 14 mit zumindest einer an dem Feldhäcksler 1 angeordneten Sensoreinrichtung 30 durch ein Bussystem 31 in Verbindung. Hierzu kann die zumindest eine Sensoreinrichtung 30 als eine an dem Vorsatzgerät 2 angeordnete optische Sensoreinrichtung ausgeführt sein, welche der Erfassung des Vorhandenseins von Erntegut dient. Hierdurch können beispielsweise Bestandslücken detektiert werden. Weiterhin kann die zumindest eine Sensoreinrichtung 30 als eine Schichthöhensensorik ausgeführt sein, welche der Erfassung des Vorhandenseins von und der Bestimmung des Durchsatzes an aufgenommenem Erntegut dient. Eine weitere Sensoreinrichtung 30 kann als wenigstens ein Drehzahlsensor des Antriebsmotors 19 ausgeführt sein. Die Signale der zumindest einen Sensoreinrichtung 30 werden der Rechenvorrichtung 16 des Fahrerassistenzsystems 14 zur Auswertung zugeführt.

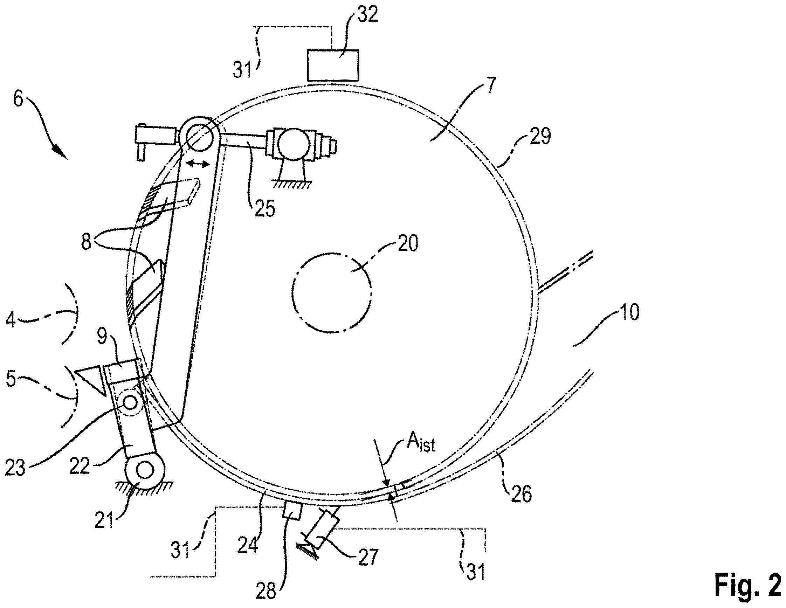

In Fig. 2 ist die Häckseltrommel 7 der Häckselvorrichtung 6 schematisch dargestellt, die um eine Drehachse 20 rotierbar ausgebildet ist. Die Häckseltrommel 7 umfasst umfangsseitig die Häckselmesser 8. Lediglich aus Gründen der Übersichtlichkeit wurde auf eine Darstellung aller über den gesamten Umfang bzw. über die gesamten 360° verteilten Häckselmesser 8 verzichtet.

Der Häckseltrommel 7 bzw. den Häckselmessern 8 ist die Gegenschneide 9 zugeordnet, sodass ein, in Fig. 2 linksseitig ankommendes und mittels der Einzugswalzen 4, 5 vorbereitetes sowie zusammengepresstes. - nicht mehr dargestelltes - Erntegut mittels der rotierenden Häckselmesser 8 und der Gegenschneide 9 abgeschnitten bzw. abgeschert wird. Aufgrund der entgegen dem Uhrzeigersinn gerichteten Rotation der Häckseltrommel 7 wird das abgeschnittene Erntegut beschleunigt/angetrieben und zu dem Auswurfschacht 10 weiter transportiert.

Zwischen dem Auswurfschacht 10 und der Gegenschneide 9 ist ein Trommelboden 24 vorgesehen. Der Trommelboden 24 ist Teil eines nicht näher dargestellten Trommelgehäuses, welches die Häckselvorrichtung 6 aufnimmt. Der Trommelboden 24 ist an der Gegenschneide 9 bzw. dessen Halterung 22 drehbar durch eine Lagerung bzw. ein Lager 23 gehaltert. Die Halterung 22 der Gegenschneide 9 ist an einem Auflager 21 drehbar abgestützt, insbesondere an einem nicht näher dargestellten Tragrahmen oder dergleichen.

Der Halterung 22 der Gegenschneide 9 ist ein Stellglied 25 zugeordnet, welches der Nachjustage der Gegenschneide 9 dient, um den Abstand zwischen den Häckselmessern 8 und der Gegenschneide 9 konstant zu halten. Aufgrund des Nachschleifens der Häckselmesser 8 und der Gegenschneide 9 verringert sich einerseits der wirksame Trommeldurchmesser der Häckseltrommel 7 bzw. der Häckselmesser 8 und andererseits verkürzt sich die Gegenschneide 9. Das Stellglied 25 ist beispielsweise als ein Linearmotor oder ein Hydraulikzylinder oder dergleichen ausgeführt. Zum Nachschleifen der Häckselmesser 8 ist eine Schleifvorrichtung 32 am Hüllkreis 29 der Häckseltrommel 7 vorgesehen.

Ein Aktor 27, der ebenfalls als ein Linearmotor oder ein Hydraulikzylinder ausgeführt ist, vorzugsweise als ein Plungerzylinder, ist an einem der Gegenschneide 9 gegenüberliegenden Ende des Trommelbodens 24 angeordnet. Der Trommelboden 24 ist durch eine Ansteuerung des Aktors 27 verstellbar, um einen ausgewählten und eingestellten Istabstand Aᵢₛₜ zwischen den Häckselmessern 8 und dem Trommelboden 24 zu verändern. Dabei ist vorgesehen, dass der Istabstand Aᵢₛₜ genau zwei Abstände, einen, insbesondere einstellbaren, Minimalabstand Aₘᵢₙ und einen, insbesondere einstellbaren, Maximalabstand Aₘₐₓ einnehmen kann. Dabei wird zu Beginn der Erntegutaufnahme der Minimalabstand Aₘᵢₙ als Istabstand Aᵢₛₜ eingestellt. Nach einer definierten Zeitdauer wird der Istabstand Aᵢₛₜ auf den Maximalabstand Aₘₐₓ verändert. Hierzu kann eine Detektion der Höhenpositionsänderung der Einzugswalzen 4, 5 herangezogen werden, aus welcher eine Änderung des Durchsatzes, insbesondere eine Zunahme, an Erntegut abgeleitet wird. Die Ansteuerung des Aktors 27 erfolgt durch das Fahrerassistenzsystem 14.

Vorzugsweise kann ein Leitblech 26 vorgesehen sein, welches sich an den Trommelboden 24 gutabgabeseitig anschließt. Zur Überwachung des aktuell eingestellten Istabstandes Aᵢₛₜ kann eine Sensoreinrichtung 28 vorgesehen sein, die durch das Bussystem 31 mit dem Fahrerassistenzsystem 14 signaltechnisch verbunden ist. Die Sensoreinrichtung 28 ist zur Bestimmung des Istabstandes Aᵢₛₜ eingerichtet und vorzugsweise als berührungsloser Abstandsensor ausgeführt.

Die Häckselvorrichtung 6 bildet zusammen mit dem Fahrerassistenzsystem 14 einen Häckseltrommelautomaten, indem die Rechenvorrichtung 16 dazu eingerichtet ist, zumindest eine Eigenschaft eines von dem Vorsatzgerät 2 aufzunehmenden Erntegutes zu bestimmen, um den Istabstand Aᵢₛₜ zwischen der Häckseltrommel 7 bzw. den Häckselmessern 8 und dem Trommelboden 24 in Abhängigkeit von zumindest einer Eigenschaft des Erntegutes fortlaufend autonom zu ermitteln und zu adaptieren. Hierzu ist der Häckseltrommelautomat in einem Automatikmodus AM betreibbar. Der Häckseltrommelautomat ist für einen wahlweisen Betrieb in einem Automatikmodus AM und einem manuellen Modus MM eingerichtet. Im manuellen Modus MM kann ein Bediener des Feldhäckslers 1 den Istabstand Aᵢₛₜ selbsttätig einstellen.

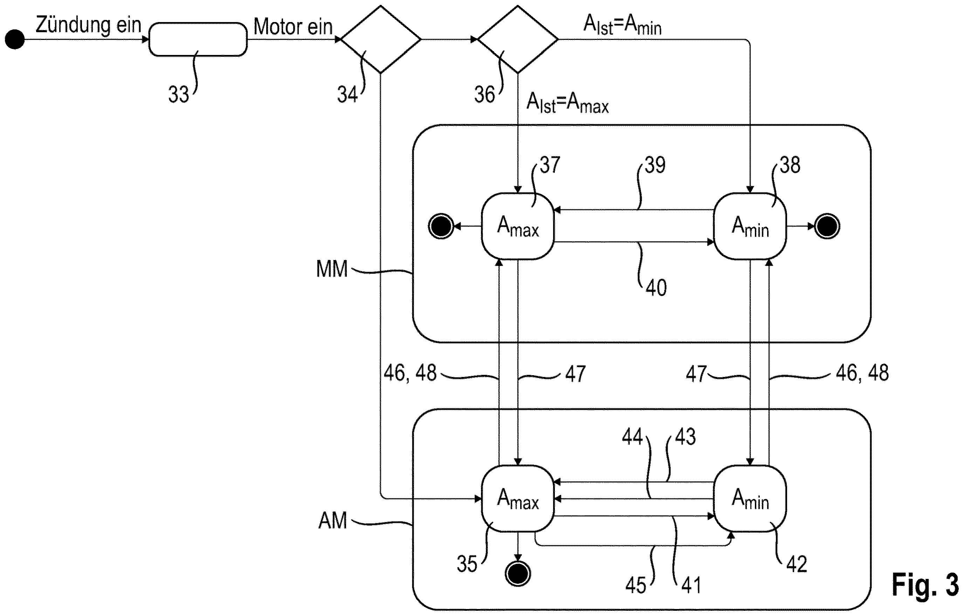

In Fig. 3 ist ein Ablaufdiagramm einer spezifischen Funktion des Häckseltrommelautomaten des Feldhäckslers 1 dargestellt. Um die Gefahr einer Fehlbedienung im manuellen Modus MM zu vermeiden, ist der Häckseltrommelautomat dazu eingerichtet ist, den Trommelboden 24 initial bei Inbetriebnahme des Feldhäckslers 1 in einer zur Häckseltrommel 7 beabstandeten Ausgangsstellung, in welcher der Trommelboden 24 den Maximalabstand Aₘₐₓ zu der Häckseltrommel 7 respektive dem Hüllkreis 29 der Häckselmesser 8 aufweist, zu halten oder in die beabstandete Ausgangsstellung zu überführen, und eine Änderung des Istabstandes Aᵢₛₜ des Trommelbodens 24 an die Häckseltrommel 7 ausgehend von der initialen Ausgangsstellung hin zum Minimalabstand Aₘᵢₙ nur unter Berücksichtigung von zumindest einem feldhäckslerspezifischen Ereignis zuzulassen. Der Maximalabstand Aₘₐₓ bestimmt sich durch einstellbare Endanschläge des Trommelbodens 24. Der durch die Ansteuerung insbesondere des Aktors 27 einstellbare Minimalabstand Aₘᵢₙ kann in Abhängigkeit von dem zu verarbeitendem Erntegut, der Bauform des Trommelbodens 24, dem Verschleißzustand des Trommelbodens 24 oder dergleichen erfolgen.

Im ersten Schritt 33 erfolgt die Inbetriebnahme des Feldhäckslers 1 durch das Einschalten der Zündung. Zu diesem Zeitpunkt sind die beiden Modi, der Automatikmodus AM und der manuelle Modus MM, des Häckseltrommelautomaten inaktiv.

Mit dem Starten des Antriebsmotors 19 wird in einem zweiten Schritt 34 durch den Häckseltrommelautomaten bestimmt, welcher der beiden Modi AM oder MM zuletzt aktiv gewesen ist. Das Starten des Antriebsmotors 19 stellt dabei ein feldhäckslerspezifisches Ereignis dar. In Abhängigkeit von dem zuletzt durch den Bediener gewählten Modus, dem manuellen Modus MM oder dem Automatikmodus AM, wird zu einem der nachfolgenden Schritte 35 oder 36 verzweigt.

Wird im zweiten Schritt 34 festgestellt, dass als letzter Modus der Automatikmodus AM ausgewählt und aktiv war, so wird im Schritt 35 der Trommelboden 24 in seine Ausgangsstellung mit dem Maximalabstand Aₘₐₓ überführt, sofern dieser die Ausgangsstellung nicht bereits innehatte. Befand sich der Trommelboden 24 bereits in seiner Ausgangsstellung, wird dieser zunächst in der Ausgangsstellung gehalten, d.h. der Trommelboden 24 weist als aktuellen Istabstand Aᵢₛₜ seinen Maximalabstand Aₘₐₓ auf.

Wird im zweiten Schritt 34 hingegen festgestellt, dass als letzter Modus der manuelle Modus MM ausgewählt worden ist und aktiv war, so wird zum Schritt 36 verzweigt.

Im Schritt 36 wird mittels der Sensoreinrichtung 28 der zuletzt eingestellte Istabstand Aᵢₛₜ des Trommelbodens 24 bestimmt. Entspricht der bestimmte Istabstand Aᵢₛₜ dem Maximalabstand Aₘₐₓ, wird zum Schritt 37 übergegangen, in welchem die Ausgangsstellung gehalten wird.

Wird im Schritt 36 als zuletzt eingestellter Istabstand Aᵢₛₜ der Minimalabstand Aₘᵢₙ bestimmt, wird zum Schritt 38 übergegangen.

Im Schritt 38 wird zunächst eine Änderung 39 des Istabstandes Aᵢₛₜ vom Minimalabstand Aₘᵢₙ auf den Maximalabstand Aₘₐₓ als Ausgangsstellung durchgeführt. Daraufhin wird im Schritt 38 das Vorliegen von zumindest einem feldhäckslerspezifischen Ereignis überprüft. Liegt ein entsprechendes feldhäckslerspezifisches Ereignis vor, wird der im manuellen Modus MM durch den Bediener ausgewählte Minimalabstand Aₘᵢₙ als Istabstand Aᵢₛₜ in Abhängigkeit von dem feldhäckslerspezifischen Ereignis eingestellt.

Dem Bediener wird nach dem Starten des Antriebsmotors 19 der im Schritt 34 bestimmte zuletzt gewählte Modus AM oder MM sowie die zuletzt gewählte Abstandseinstellung, Minimalabstand Aₘᵢₙ oder Maximalabstand Aₘₐₓ, des Trommelbodens 24 durch die Eingabe-Ausgabe-Einheit 18 angezeigt. Zu diesem Zeitpunkt hat der Bediener die Möglichkeit, den Modus zu wechseln sowie eine Änderung der Abstandseinstellung des Trommelbodens 24 auszuwählen.

Im manuellen Modus MM ist eine Änderung 40 des Istabstandes Aᵢₛₜ ausgehend von der Ausgangsstellung, in welcher der Maximalabstand Aₘₐₓ eingestellt ist, hin zum Minimalabstand Aₘᵢₙ nur bei laufendem Antriebsmotor 19 und inaktiver Einzugsvorrichtung 3 als feldhäckslerspezifischen Ereignissen möglich. Ist eine oder sind beide Voraussetzungen zur Änderung des Istabstandes Aᵢₛₜ unerfüllt, so wird mittels der Eingabe-Ausgabe-Einheit 18 dem Bediener ein Hinweis darauf gegeben, welche Voraussetzung für die Änderung des Istabstandes Aᵢₛₜ gegeben sein muss.

Hingegen lässt sich im manuellen Modus MM eine Änderung 41 des Istabstandes Aᵢₛₜ vom Minimalabstand Aₘᵢₙ hin zum Maximalabstand Aₘₐₓ unabhängig vom Betriebszustand der Einzugsvorrichtung 3 vornehmen.

Im Automatikmodus AM erfolgt eine Änderung des Istabstandes Aᵢₛₜ ausgehend von der Ausgangsstellung gleichfalls unter Berücksichtigung von zumindest einem feldhäckslerspezifischen Ereignis. Dabei wird als ein feldhäckslerspezifisches Ereignis der Betriebszustand des Hauptantriebsstranges, "aktiv" oder "inaktiv", detektiert. Wird als Betriebszustand des Hauptantriebsstranges "aktiv" detektiert, so erfolgt eine Änderung 41 des Istabstandes Aᵢₛₜ des Trommelbodens 24 ausgehend von der Ausgangsstellung hin zum Minimalabstand Aₘᵢₙ.

Im Schritt 42 wird überwacht, ob zumindest ein feldhäckslerspezifisches Ereignis auftritt, welches eine automatische Änderung 43 des aktuellen Istabstandes Aᵢₛₜ des Trommelbodens 24 ausgehend von dem Minimalabstand Aₘᵢₙ hin zum Maximalabstand Aₘₐₓ erfordert. Eine solche Änderung 43 des Istabstandes Aᵢₛₜ erfolgt, wenn bei einer Fahrgeschwindigkeit des Feldhäckslers 1 größer Null, einer Detektion, dass sich die Einzugsvorrichtung 3 und das daran angeordnete Vorsatzgerät 2 in ihrer Arbeitsposition befinden und dass eine einen Schwellwert überschreitende Auslenkung der Einzugswalzen 4, 5 durch die Schichthöhensensorik die Aufnahme von Erntegut signalisiert wird.

Wird im Schritt 42 als ein feldhäckslerspezifisches Ereignis eine Änderung des Betriebszustands des Hauptantriebsstranges von "aktiv" auf "inaktiv" detektiert, und der aktuelle Istabstand Aᵢₛₜ entspricht dem Minimalabstand Aₘᵢₙ so erfolgt eine automatische Änderung 44 des Istabstandes Aᵢₛₜ des Trommelbodens 24 ausgehend von dem Minimalabstand Aₘᵢₙ hin zum Maximalabstand Aₘₐₓ.

Ein weiteres feldhäckslerspezifisches Ereignis, das zu einer automatischen Änderung 45 des Istabstandes Aᵢₛₜ führt, ist das Initiieren der Durchführung eines Schleifvorgangs der Häckselmesser 8 und/oder der Gegenschneide 9. Während des Schleifvorganges der Häckselmesser 8 und/oder der Gegenschneide 9 wird der Trommelboden 24, ausgehend von dem aktuellen Istabstand Aᵢₛₜ, der dem Maximalabstand Aₘₐₓ oder dem Minimalabstand Aₘᵢₙ entspricht, einmalig über den gesamten Verstellbereich zwischen dem Maximalabstand Aₘₐₓ in der Ausgangsstellung und dem Minimalabstand Aₘᵢₙ verfahren, und anschließen wieder in seinen vorherigen Istabstand Aᵢₛₜ überführt.

Ein weiteres feldhäckslerspezifisches Ereignis, das zu einer Änderung 45 des Istabstandes Aᵢₛₜ führt, ist die Detektion eines Fremdkörpers in der Einzugsvorrichtung 3. Dabei kann bei einer Detektion eines Fremdkörpers die Überführung des Trommelbodens 24 ausgehend vom Maximalabstand Aₘᵢₙ in eine Position, in welcher der Trommelboden 24 den Minimalabstand Aₘᵢₙ zu der Häckseltrommel 7 aufweist, automatisch erfolgen.

Ein weiteres feldhäckslerspezifisches Ereignis ist das Auftreten einer Motordrückung des Antriebsmotors 19 des Feldhäckslers 1 und das gleichzeitige Vorhandensein von Erntegut im Vorsatzgerät 2 und/oder der Einzugsvorrichtung 3. Bei einem Auftreten einer Motordrückung und dem gleichzeitigen Vorhandensein von Erntegut im Vorsatzgerät 2 und/oder der Einzugsvorrichtung 3 wird das Verstellen des aktuellen Istabstandes Aᵢₛₜ des Trommelbodens 24 in eine in eine Position, in welcher der Trommelboden 24 den Minimalabstand Aₘᵢₙ zur Häckseltrommel 7 aufweist, verhindert. Dies dient dazu, zu verhindern, dass die Motordrückung noch verstärkt wird, so dass es zum Abwürgen des Antriebsmotors 19 kommt. Hierdurch kann dem Auftreten eines Erntegutstaus begegnet werden.

Ein weiteres feldhäckslerspezifisches Ereignis, das zu einer Änderung 45 des Istabstandes Aᵢₛₜ führt, ist ein Absinken des Durchsatzes an Erntegut unterhalb eines Schwellwertes, während sich das Vorsatzgerät 2 und/oder die Einzugsvorrichtung 3 in ihrer Arbeitsposition befinden. Das Absinken des Durchsatzes während der Erntegutaufnahme kann durch eine Bestandslücke ausgelöst werden, was eine, zumindest temporäre, Anpassung des Abstands des Trommelbodens 24 an die geänderten Erntebedingungen erfordern kann, indem temporär der Minimalabstand Aₘᵢₙ eingestellt wird.

Ein weiteres feldhäckslerspezifisches Ereignis, das zu einer Änderung 45 des Istabstandes Aᵢₛₜ führt, ist das manuelle Abschalten der Einzugsvorrichtung 3, was beispielsweise bei einem Wechsel des Transportwagens oder Überladewagens während des laufenden Ernteprozesses der Fall ist. In dieser Situation wird der Istabstand Aᵢₛₜ vom Maximalabstand Aₘₐₓ auf den Mindestabstand Aₘᵢₙ geändert.

Der Häckseltrommelautomat ist dazu eingerichtet, einen wechselweisen Übergang zwischen dem manuellen Modus MM und dem Automatikmodus AM aufgrund einer manuellen Eingabe 46, 47 durchzuführen. Des Weiteren ist der Häckseltrommelautomat dazu eingerichtet, dass bei einem Ausfall eines Regelparameters ein automatischer Übergang 48 in den manuellen Modus MM erfolgt. Das Durchführen des manuellen Wechsels 46,47 der Betriebsmodi, vom manuellen Modus MM in den Automatikmodus AM und umgekehrt, unterliegt der Voraussetzung des Vorliegens zumindest eines feldhäckslerspezifischen Ereignisses, wie weiter oben bereits ausgeführt wurde. Hingegen kommt es bei einem Ausfall eines für die Funktion des Häckseltrommelautomaten erforderlichen Regelparameters, wie der Detektion des Betriebszustands des Antriebsmotors 19 und/oder des Hauptantriebsstranges, zu einem automatischen Wechsel in den manuellen Modus MM. Dabei ist vorgesehen, dass die vor dem Ausfall eingestellte aktuelle Trommelbodenposition, d.h. der jeweils aktuelle Istabstand Aᵢₛₜ, zunächst beibehalten wird. Weitere Regelparameter können die Betriebszustände und/oder Betriebsparameter von Vorsatzgerät 2, Einzugsvorrichtung 3 sowie Häckselvorrichtung 6 bilden. Sowohl der aktuell eingestellte Modus AM oder MM als auch der aktuelle Istabstand Aᵢₛₜ werden dem Bediener mittels der Eingabe-Ausgabe-Einheit 18 signalisiert.

### Bezugszeichenliste

| | | | |
|---|---|---|---|
| 1 | Feldhäcksler | 34 | Schritt |
| 2 | Vorsatzgerät | 35 | Schritt |
| 3 | Einzugsvorrichtung | 36 | Schritt |
| 4 | Obere Einzugswalze | 37 | Schritt |
| 5 | Untere Einzugswalze | 38 | Schritt |
| 6 | Häckselvorrichtung | 39 | Änderung |
| 7 | Häckseltrommel | 40 | Änderung |
| 8 | Häckselmesser | 41 | Änderung |
| 9 | Gegenschneide | 42 | Schritt |
| 10 | Auswurfschacht | 43 | Änderung |
| 11 | Nachbearbeitungsvorrichtung | 44 | Änderung |
| 12 | Nachbeschleuniger | 45 | Änderung |
| 13 | Auswurfkrümmer | | |
| 14 | Fahrerassistenzsystem | Aᵢₛₜ | Istabstand |
| 15 | Speicher | Aₘᵢₙ | Minimalabstand |
| 16 | Recheneinheit | Aₘₐₓ | Maximalabstand |
| 17 | Fahrerkabine | AM | Automatikmodus |
| 18 | Eingabe-Ausgabe-Einheit | MM | Manueller Modus |
| 19 | Antriebsmotor | | |
| 20 | Drehachse | | |
| 21 | Auflager | | |
| 22 | Halterung | | |
| 23 | Lager | | |
| 24 | Trommelboden | | |
| 25 | Stellglied | | |
| 26 | Leitblech | | |
| 27 | Aktor | | |
| 28 | Sensoreinrichtung | | |
| 29 | Hüllkreis | | |
| 30 | Sensoreinrichtung | | |
| 31 | Bussystem | | |
| 32 | Schleifvorrichtung | | |
| 33 | Schritt | | |

## Patentansprüche

1. Selbstfahrender Feldhäcksler (1), umfassend:
- eine Einzugsvorrichtung (3), an der ein Vorsatzgerät (3) angeordnet ist,
- eine Häckselvorrichtung (6), die eine rotierend angetriebene Häckseltrommel (7) mit Häckselmessern (8) und eine Gegenschneide (9) zum Zerkleinern von Erntegut sowie einen zwischen Gegenschneide (9) und einem Auswurfkanal (10) angeordneten, relativ zu der Häckseltrommel (7) abstandsveränderlichen Trommelboden (24) aufweist, und
- ein Fahrerassistenzsystem (14) zur Ansteuerung zumindest der Häckselvorrichtung (6), wobei das Fahrerassistenzsystem (14) einen Speicher (15) zum Hinterlegen von Daten und eine Rechenvorrichtung (16) zur Verarbeitung der in dem Speicher (15) hinterlegten Daten umfasst, wobei die Häckselvorrichtung (6) zusammen mit dem Fahrerassistenzsystem (14) einen Häckseltrommelautomaten bildet, **dadurch gekennzeichnet, dass** der Häckseltrommelautomat dazu eingerichtet ist, den Trommelboden (24) initial bei Inbetriebnahme des Feldhäckslers (1) in einer zur Häckseltrommel (7) beabstandeten Ausgangsstellung, in welcher der Trommelboden (24) einen, insbesondere einstellbaren, Maximalabstand (Aₘₐₓ) zu der Häckseltrommel (7) aufweist, zu halten oder in die beabstandete Ausgangsstellung zu überführen, und eine Durchführung einer Annäherung des Trommelbodens (24) an die Häckseltrommel (6), ausgehend von der Ausgangsstellung, nur unter Berücksichtigung von zumindest einem feldhäckslerspezifischen Ereignis zuzulassen.

2. Feldhäcksler (1) nach Anspruch 1, **dadurch gekennzeichnet, dass** ein feldhäckslerspezifisches Ereignis das Durchführen eines Schleifvorgangs der Häckselmesser (8) und/oder der Gegenschneide (9) ist.

3. Feldhäcksler (1) nach Anspruch 1 oder 2, **dadurch gekennzeichnet, dass** ein feldhäckslerspezifisches Ereignis die Detektion eines Fremdkörpers in der Einzugsvorrichtung (3) ist.

4. Feldhäcksler (1) nach Anspruch 3, **dadurch gekennzeichnet, dass** bei einer Detektion eines Fremdkörpers die Überführung des Trommelbodens (24) in eine Position, in welcher der Trommelboden (24) einen minimalen Abstand (Aₘᵢₙ)zu der Häckseltrommel (7) aufweist, automatisch erfolgt.

5. Feldhäcksler (1) nach einem der vorangehenden Ansprüche, **dadurch gekennzeichnet, dass** ein feldhäckslerspezifisches Ereignis die Detektion des inaktiven Betriebszustands der Einzugsvorrichtung (3) ist.

6. Feldhäcksler (1) nach einem der vorangehenden Ansprüche, **dadurch gekennzeichnet, dass** ein feldhäckslerspezifisches Ereignis das Auftreten einer Motordrückung eines Antriebsmotors (19) des Feldhäckslers (1) und das gleichzeitige Vorhandensein von Erntegut im Vorsatzgerät (2) und/oder der Einzugsvorrichtung (3) ist.

7. Feldhäcksler (1) nach einem der vorangehenden Ansprüche, **dadurch gekennzeichnet, dass** ein feldhäckslerspezifisches Ereignis ein Absinken des Durchsatzes an Erntegut unterhalb eines Schwellwertes ist, während sich das Vorsatzgerät (2) und/oder die Einzugsvorrichtung (3) in ihrer Arbeitsposition befinden.

8. Feldhäcksler (1) nach einem der vorangehenden Ansprüche, **dadurch gekennzeichnet, dass** ein feldhäckslerspezifisches Ereignis das manuelle Abschalten der Einzugsvorrichtung (3) ist.

9. Feldhäcksler (1) nach einem der vorangehenden Ansprüche, **dadurch gekennzeichnet, dass** der Feldhäcksler (1) einen Hauptantriebsstrang aufweist, dessen aktiver oder inaktiver Betriebszustand ein feldhäckslerspezifisches Ereignis ist, und dass der Trommelboden (24) bei Detektion des inaktiven Betriebszustands des Hauptantriebsstrangs automatisch in seine Ausgangsstellung überführt wird.

10. Feldhäcksler (1) nach einem der vorangehenden Ansprüche, **dadurch gekennzeichnet, dass** der Häckseltrommelautomat für einen wahlweisen Betrieb in einem Automatikmodus (AM) und einem manuellen Modus (MM) eingerichtet ist.

11. Feldhäcksler (1) nach Anspruch 10, **dadurch gekennzeichnet, dass** der Häckseltrommelautomat dazu eingerichtet ist, einen Übergang zwischen dem manuellen Modus (MM) und dem Automatikmodus (AM) aufgrund einer manuellen Eingabe durchzuführen oder dass bei einem Ausfall eines Regelparameters ein automatischer Übergang in den manuellen Modus (MM) erfolgt.

12. Feldhäcksler (1) nach Anspruch 10 oder 11, **dadurch gekennzeichnet, dass** der Häckseltrommelautomat eine Eingabe-Ausgabe-Einheit (18) ansteuert, welche zur Anzeige des aktiven Modus (AM, MM) eingerichtet ist.

13. Feldhäcksler (1) nach Anspruch 12, **dadurch gekennzeichnet, dass** der Häckseltrommelautomat die Eingabe-Ausgabe-Einheit (18) ansteuert, um den Ausfall eines Regelparameters anzuzeigen.

14. Feldhäcksler (1) nach Anspruch 12 oder 13, **dadurch gekennzeichnet, dass** der Häckseltrommelautomat die Eingabe-Ausgabe-Einheit (18) ansteuert, um zu signalisieren, dass ein feldhäckslerspezifisches Ereignis vorliegt, welches eine Verstellung des Abstands des Trommelbodens (24) verhindert.

15. Feldhäcksler (1) nach einem der vorangehenden Ansprüche, **dadurch gekennzeichnet, dass** der Feldhäcksler (1) wenigstens eine Sensoreinrichtung (30) umfasst, die dazu eingerichtet ist, zumindest ein feldhäckslerspezifisches Ereignis zu detektieren.

## Claims

1. A self-propelled forage harvester (1), comprising:
- a feeder device (3) on which a front attachment (3) is disposed,
- a chopping device (6) which has a rotatably driven chopping drum (7) with chopping knives (8) and a counter cutter (9) for the comminution of harvested material as well as a drum floor (24), the clearance of which relative to the chopping drum (7) can be varied, disposed between the counter cutter (9) and a discharge channel (10), and
- a driver assistance system (14) for controlling at least the chopping device (6), wherein the driver assistance system (14) has a memory (15) for storing data and a computing device (16) for processing the data stored in the memory (15), wherein the chopping device (6) together with the driver assistance system (14) forms an automated chopping drum, **characterized in that** the automated chopping drum is configured to hold the drum floor (24), when initially starting up the forage harvester (1), in a starting position with a clearance from the chopping drum (7), in which the drum floor (24) has a maximum clearance (Aₘₐₓ), which in particular can be adjusted, from the chopping drum (7), or to transfer it into the starting position with a clearance, and to allow carrying out an approach of the drum floor (24) to the chopping drum (6) starting from the starting position only on the basis of at least one event which is specific to the forage harvester.

2. The forage harvester (1) according to claim 1, **characterized in that** a forage harvester-specific event is carrying out a procedure for sharpening the chopping knives (8) and/or the counter cutter (9).

3. The forage harvester (1) according to claim 1 or claim 2, **characterized in that** a forage harvester-specific event is the detection of a foreign object in the feeder device (3).

4. The forage harvester (1) according to claim 3, **characterized in that** upon detection of a foreign object, the transfer of the drum floor (24) into a position in which the drum floor (24) has a minimum clearance (Aₘᵢₙ) from the chopping drum (7) is carried out automatically.

5. The forage harvester (1) according to one of the preceding claims, **characterized in that** a forage harvester-specific event is the detection of the inactive operational state of the feeder device (3).

6. The forage harvester (1) according to one of the preceding claims, **characterized in that** a forage harvester-specific event is the occurrence of engine lugging of a propulsion engine (19) of the forage harvester (1) and the simultaneous presence of harvested material in the front attachment (2) and/or the feeder device (3).

7. The forage harvester (1) according to one of the preceding claims, **characterized in that** a forage harvester-specific event is a fall in the throughput of harvested material below a threshold value while the front attachment (2) and/or the feeder device (3) are in their working positions.

8. The forage harvester (1) according to one of the preceding claims, **characterized in that** a forage harvester-specific event is the manual switching-off of the feeder device (3).

9. The forage harvester (1) according to one of the preceding claims, **characterized in that** the forage harvester (1) has a main drive train the active or inactive operational state of which is a forage harvester-specific event, and **in that** the drum floor (24) is automatically transferred into its starting position upon detection of the inactive operational state of the main drive train.

10. The forage harvester (1) according to one of the preceding claims, **characterized in that** the automated chopping drum is configured for an optional operation in an automatic mode (AM) and in a manual mode (MM).

11. The forage harvester (1) according to claim 10, **characterized in that** the automated chopping drum is configured to carry out a changeover between the manual mode (MM) and the automatic mode (AM) on the basis of a manual input, or **in that** in the case of a malfunction of a control parameter to carry out an automatic changeover into the manual mode (MM).

12. The forage harvester (1) according to claim 10 or claim 11, **characterized in that** the automated chopping drum controls an input/output unit (18) which is configured to display the active mode (AM, MM).

13. The forage harvester (1) according to claim 12, **characterized in that** the automated chopping drum controls the input/output unit (18) in order to display the malfunction of a control parameter.

14. The forage harvester (1) according to claim 12 or claim 13, **characterized in that** the automated chopping drum controls the input/output unit (18) in order to indicate that a forage harvester-specific event has occurred which prevents an adjustment of the clearance from the drum floor (24).

15. The forage harvester (1) according to one of the preceding claims, **characterized in that** the forage harvester (1) comprises at least one sensor device (30) which is configured to detect at least one forage harvester-specific event.

## Revendications

1. Récolteuse-hacheuse-chargeuse de fourrage automotrice (1), comprenant :
- un dispositif d'alimentation (3) sur lequel est monté un outil frontal (3),
- un dispositif de hachage (6) qui présente un tambour hacheur (7), entraîné en rotation et doté de couteaux de hachage (8), et une contre-lame (9) destinés à broyer la récolte, ainsi qu'un panneau de tambour (24) qui est disposé entre la contre-lame (9) et un canal d'éjection (10) et dont la distance par rapport au tambour hacheur (7) peut être modifiée,
- un système d'assistance au conducteur (14) destiné à activer au moins le dispositif de hachage (6), le système d'assistance au conducteur (14) comprenant une mémoire (15) pour enregistrer des données et un dispositif de calcul (16) pour le traitement des données enregistrées dans la mémoire (15), le dispositif de hachage (6) formant avec le système d'assistance au conducteur (14) un automate à tambour hacheur, **caractérisée en ce que** l'automate à tambour hacheur est conçu pour maintenir le panneau de tambour (24), initialement lors de la mise en service de la récolteuse-hacheuse-chargeuse de fourrage (1), dans une position de départ qui est espacée du tambour hacheur (7) et dans laquelle le panneau de tambour (24) présente une distance maximale (Aₘₐₓ), notamment réglable, par rapport au tambour hacheur (7), ou pour l'amener dans la position de départ située à distance, et pour permettre la réalisation d'un rapprochement du panneau de tambour (24) du tambour hacheur (7), en partant de la position de départ, uniquement en tenant compte d'au moins un événement spécifique à la récolteuse-hacheuse-chargeuse de fourrage.

2. Récolteuse-hacheuse-chargeuse de fourrage (1) selon la revendication 1, **caractérisée en ce qu'**un événement spécifique à la récolteuse-hacheuse-chargeuse est la réalisation d'une opération d'affûtage des couteaux de hachage (8) et/ou de la contre-lame (9).

3. Récolteuse-hacheuse-chargeuse de fourrage (1) selon la revendication 1 ou 2, **caractérisée en ce qu'**un événement spécifique à la récolteuse-hacheuse-chargeuse est la détection d'un corps étranger dans le dispositif d'alimentation (3).

4. Récolteuse-hacheuse-chargeuse de fourrage (1) selon la revendication 3, **caractérisée en ce que** lors de la détection d'un corps étranger, le transfert du panneau de tambour (24) dans une position dans laquelle le panneau de tambour (24) présente une distance minimale (Aₘᵢₙ) par rapport au tambour hacheur (7) s'effectue de manière automatique.

5. Récolteuse-hacheuse-chargeuse de fourrage (1) selon une des revendications précédentes, **caractérisée en ce qu'**un événement spécifique à la récolteuse-hacheuse-chargeuse est la détection de l'état de fonctionnement inactif du dispositif d'alimentation (3).

6. Récolteuse-hacheuse-chargeuse de fourrage (1) selon une des revendications précédentes, **caractérisée en ce qu'**un événement spécifique à la récolteuse-hacheuse-chargeuse est l'apparition d'une chute de régime de moteur autorisée d'un moteur d'entraînement (19) de la récolteuse-hacheuse-chargeuse de fourrage (1) et la présence simultanée de récolte dans l'outil frontal (2) et/ou le dispositif d'alimentation (3).

7. Récolteuse-hacheuse-chargeuse de fourrage (1) selon une des revendications précédentes, **caractérisée en ce qu'**un événement spécifique à la récolteuse-hacheuse-chargeuse est une baisse du débit de récolte, en dessous d'une valeur seuil, pendant que l'outil frontal (2) et/ou le dispositif d'alimentation (3) se trouvent dans leur position de travail.

8. Récolteuse-hacheuse-chargeuse de fourrage (1) selon une des revendications précédentes, **caractérisée en ce qu'**un événement spécifique à la récolteuse-hacheuse-chargeuse est la coupure manuelle du dispositif d'alimentation (3).

9. Récolteuse-hacheuse-chargeuse de fourrage (1) selon une des revendications précédentes, **caractérisée en ce que** la récolteuse-hacheuse-chargeuse de fourrage (1) présente une chaîne cinématique principale dont l'état de fonctionnement actif ou inactif est un événement spécifique à la récolteuse-hacheuse-chargeuse, et **en ce que** lors de la détection de l'état de fonctionnement inactif de la chaîne de transmission cinématique principale, le panneau de tambour (24) est amené automatiquement dans sa position de départ.

10. Récolteuse-hacheuse-chargeuse de fourrage (1) selon une des revendications précédentes, **caractérisée en ce que** l'automate à tambour hacheur est conçu pour un fonctionnement, au choix, dans un mode automatique (AM) et un mode manuel (MM).

11. Récolteuse-hacheuse-chargeuse de fourrage (1) selon la revendication 10, **caractérisée en ce que** l'automate à tambour hacheur est conçu pour effectuer un passage entre le mode manuel (MM) et le mode automatique (AM), sur la base d'une saisie manuelle, ou **en ce qu'**en cas de défaillance d'un paramètre de réglage, un passage automatique s'effectue vers le mode manuel (MM).

12. Récolteuse-hacheuse-chargeuse de fourrage (1) selon la revendication 10 ou 11, **caractérisée en ce que** l'automate à tambour hacheur active une unité d'entrée-sortie (18) qui est conçue pour l'affichage du mode actif (AM, MM).

13. Récolteuse-hacheuse-chargeuse de fourrage (1) selon la revendication 12, **caractérisée en ce que** l'automate à tambour hacheur active l'unité d'entrée-sortie (18) pour indiquer la défaillance d'un paramètre de réglage.

14. Récolteuse-hacheuse-chargeuse de fourrage (1) selon la revendication 12 ou 13, **caractérisée en ce que** l'automate à tambour hacheur active l'unité d'entrée-sortie (18) pour signaler la présence d'un événement spécifique à la récolteuse-hacheuse-chargeuse, qui empêche le réglage de la distance du panneau de tambour (24).

15. Récolteuse-hacheuse-chargeuse de fourrage (1) selon une des revendications précédentes, **caractérisée en ce que** la récolteuse-hacheuse-chargeuse de fourrage (1) comprend au moins un dispositif de capteur (30) qui est conçu pour détecter au moins un événement spécifique à la récolteuse-hacheuse-chargeuse.
